Europäisches Patentamt

European Patent Office

Office européen des brevets

(19)

(11) Veröffentlichungsnummer: **0 213 111**
**A1**

(12) # EUROPÄISCHE PATENTANMELDUNG

(21) Anmeldenummer: 86890211.5

(22) Anmeldetag: 16.07.86

(51) Int. Cl.⁴: **B23K 23/00**

(30) Priorität: 18.07.85 AT 2141/85

(43) Veröffentlichungstag der Anmeldung:
04.03.87 Patentblatt 87/10

(84) Benannte Vertragsstaaten:
BE CH DE FR GB IT LI LU NL SE

(71) Anmelder: VOEST-ALPINE Aktiengesellschaft
Friedrichstrasse 4
A-1011 Wien(AT)

(72) Erfinder: Moser, Alfred, Dr. Dipl.-Ing.
Theodoraweg 1
A-8706 Leoben(AT)
Erfinder: Augustin, Hubert, Dipl-Ing.
Hauptplatz 8
A-8700 Leoben(AT)

(74) Vertreter: Kretschmer, Adolf, Dipl.-Ing. et al
Patentanwälte Dipl.Ing. A. Kretschmer Dr.
Thomas M. Haffner Schottengasse 3a
A-1014 Wien(AT)

(54) Verfahren zur Verbindung von aus austenitischem Manganhartstahlguss bestehenden Herzstücken mit aus Kohlenstoffstahl bestehenden Schienen.

(57) Zur Verbindung von aus austenitischem Manganhartstahlguß bestehenden Herzstücken mit aus Kohlenstoffstahl bestehenden Schienen wird ein aluminothermisches Verfahren vorgeschlagen, bei welchem der Kohlenstoffgehalt der aluminothermischen Schmelze mit 0,2 Gew.-% begrenzt ist. Bevorzugt wird hiebei so vorgegangen, daß die Zusammensetzung der Schmelze einem Ni-Äquivalent von 13 bis 35 % und einem Cr-Äquivalent von 8 bis 25 %, bezogen auf das Schäffler-Diagramm, entspricht, wobei der Äquivalentwert für Ni = Ix%Ni + 30x%C + 0,5x%Mn und der Äquivalentwert für Cr = Ix%Cr + Ix%Mo + 1,5x%Si bei einem Kohlenstoffgehalt ≤ 0,15 %, vorzugsweise ≤ 0,1 % beträgt.

## Verfahren zur Verbindung von aus austenitischem Manganhartstahlguß bestehenden Herzstücken mit aus Kohlenstoffstahl bestehenden Schienen

Die Erfindung bezieht sich auf ein Verfahren zur Verbindung von aus austenitischem Manganhartstahlguß bestehenden Herzstücken mit aus Kohlenstoffstahl bestehenden Schienen durch aluminothermisches Schweißen.

Manganhartstahluß wird im Weichenbau meist als Material für die Herzstücke von Kreuzungen oder Weichen eingesetzt, da derartige Stähle sehr gute Verschleißeigenschaften aufweisen. Die im Eisenbahnwesen eingesetzten Schienen bestehen in der Regel aus Kohlenstoffstahl und die unmittelbare Verschweißung von derartigen Kohlenstoffstählen mit Manganhartstahlguß ist auf Grund der unterschiedlichen erforderlichen Temperaturbehandlung der miteinander zu verbindenden Werkstücke nicht ohne weiteres möglich. Die Verbindung der ManganhartstahlgußHerzstücke mit den Anschlußschienen erfolgt daher derzeit durch Laschen oder es werden vor der Verlegung im Gleis die Manganhartstahlguß-Herzstücke unter Verwendung eines Zwischenstückes aus kohlenstoffarmem austenitischem Stahl mit einer aus Kohlenstoffstahl bestehenden Anschlußschiene verschweißt, welche dann im Gleis mit der Anschlußschiene durch Schweißen verbunden werden kann. Bei Auftreten eines Bruches dieser Verbindung muß das Herzstück zum Anschweißen eines neuen Zwischenstückes und der Anschlußschiene ausgebaut werden. Es ist weiters bereits bekannt, die Schweißverbindung durch aluminothermisches Schweißen vorzunehmen, wobei auch hier eine fehlerfreie Verbindung nicht ohne weiteres erzielt werden kann. Dies ist darauf zurückzuführen, daß es wegen der bei der Schweißung auftretenden Diffusionsvorgänge in der Verbindungszone im Manganhartstahl bei der nachfolgenden Abkühlung zu Martensitbildung kommt. Diese Martensitbildung könnte nur durch eine sehr langsame Abkühlung vermieden werden.

Bei einer langsamen Abkühlung kann es aber in der wärmebeeinflußten Zone zu Karbidausscheidungen im Manganhartstahl kommen, wodurch die Zähigkeit ebenfalls negativ beeinflußt wird.

Aus der AT-PS 350 881 ist ein Verfahren zur Verbindung von aus Manganhartstahlguß bestehenden Herzstücken mit aus Kohlenstoffstahl bestehenden Schienen bekanntgeworden, bei welchem ein in der Länge mit höchstens 20 bis 25 mm begrenztes Zwischenstück aus einem kohlenstoffarmen austenitischen Stahl mit dem Manganhartstahlguß-Herzstück verschweißt wurde. Die Abkühlung dieser Schweißverbindung erfolgt relativ langsam im Vergleich zu der Abkühlung nach der nachfolgenden Verschweißung des Zwischenstückes mit der Regelschiene. Für die Herstellung einer derartigen Schweißverbindung war somit eine Mehrzahl von aufeinanderfolgenden Verfahrensschritten erforderlich, welche durchwegs eine genaue Kontrolle der einzelnen Verfahrensparameter erforderten.

Es ist weiters bereits bekannt, die Schweißverbindung durch aluminothermische Schweißung vorzunehmen. In der AT-PS 374 720 ist zu diesem Zweck eine aluminothermisch gebildete Stahlschmelze vorgeschlagen worden, welche im wesentlichen frei von Phosphor und Silizium ist und einen Kohlenstoffgehalt zwischen 0,75 und 0,95 Gew.-% aufweist. Bei einer derartigen aluminothermischen Schmelze lassen sich Karbidausscheidungen nicht sicher verhindern, wodurch die Zähigkeit negativ beeinflußt werden kann.

Die Erfindung zielt nun darauf ab, eine Schweißung unter Anwendung einer aluminothermisch gebildeten Schmelze zu ermöglichen, bei welcher die Gefahr von Karbidausscheidungen weitgehend vermieden ist und auch bei relativ rascher Abkühlung Martensitbildung verhindert wird. Zur Lösung dieser Aufgabe besteht das erfindungsgemäße Verfahren im wesentlichen darin, daß ein aluminothermisches Gemisch verwendet wird, welches eine kohlenstoffarme, austenitische Schmelze mit einem Kohlenstoffgehalt ≤ 0,2 Gew.-%, vorzugsweise ≤ 0,15 Gew.-%, ergibt. Dadurch, daß ein aluminothermisches Gemisch verwendet wird, welches eine kohlenstoffarme austenitische Schmelze mit maximal 0,2 Gew.-% Kohlenstoffgehalt ergibt, kann die Gefahr einer Karbidausscheidung wesentlich herabgesetzt werden, und es hat sich gezeigt, daß auch bei rascher Abkühlung die Martensitbildung nicht zu befürchten ist. Auch Aufhärtungen im Schienenwerkstoff können in einfacher Weise dadurch vermieden werden, daß eine vergleichsweise langsamere Abkühlung dieses Teiles vorgenommen wird. In besonders einfacher Weise kann diese verlangsamte Abkühlung durch Abdecken mit wärmedämmenden Schutzschichten, insbesondere mit wärmedämmenden, feuerfesten, pulverförmigen Materialien, im Bereich der Verbindung an die Regelschiene erzielt werden.

In besonders vorteilhafter Weise wird das erfindungsgemäße Verfahren so ausgeführt, daß die Zusammensetzung der Schmelze einem Ni-Äquivalent von 13 bis 35 % und einem Cr-Äquivalent von 8 bis 25 %, bezogen auf das Schäffler-Diagramm, entspricht, wobei der Äquivalentwert für Ni = lx%Ni + 30x%C + 0,5x%Mn und der Äquivalentwert für Cr = lx%Cr + lx%Mo + 1,5x%Si bei einem Kohlenstoffgehalt ≤ 0,15%, vorzugsweise ≤ 0,1 % beträgt. Mit derartigen Schmelzen lassen sich besonders verschleißfeste, dauerhafte und bruchsichere Verbindungen zwischen Manganhartstahlguß und Regelschienenstahl erzielen.

## Ansprüche

1. Verfahren zur Verbindung von aus austenitischem Manganhartstahlguß bestehenden Herzstücken mit aus Kohlenstoffstahl bestehenden Schienen durch aluminothermisches Schweißen, dadurch gekennzeichnet, daß ein aluminothermisches Gemisch verwendet wird, welches eine kohlenstoffarme, austenitische Schmelze mit einem Kohlenstoffgehalt ≤ 0,2 Gew.-%, vorzugsweise ≤ 0,15 Gew.-%, ergibt.

2. Verfahren nach Anspruch 1, dadurch gekennzeichnet, daß die Zusammensetzung der Schmelze einem Ni-Äquivalent von 13 bis 35 % und einem Cr-Äquivalent von 8 bis 25 %, bezogen auf das Schäffler-Diagramm, entspricht, wobei der Äquivalentwert für Ni = lx%Ni + 30x%C + 0,5x%Mn und der Äquivalentwert für Cr = lx%Cr + lx%Mo + 1,5x%Si bei einem Kohlenstoffgehaltgehalt ≤ 0,15 %, vorzugsweise ≤ 0,1 %, beträgt.

3. Verfahren nach Anspruch 1 oder 2, dadurch gekennzeichnet, daß nach Erstarrung der aluminothermischen Schmelze die weitere Abkühlung im Bereich des Manganhartstahlgusses rascher vorgenommen wird als im Bereich der aus Kohlenstoffstahl bestehenden Schienen.

4. Verfahren nach Anspruch 3, dadurch gekennzeichnet, daß zur Abkühlung der Schweißverbindung die Anschlußstelle an die Regelschiene mit wärmedämmendem, feuerfestem Material, insbesondere pulverförmigem Material, abgedeckt wird.

| | EINSCHLÄGIGE DOKUMENTE | | EP 86890211.5 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| D,A | <u>AT - B - 374 720</u> (BRITISH RAILWAYS)<br><br>* Ansprüche *<br><br>---- | 1 | B 23 K 23/.00 | |
| | | | **RECHERCHIERTE SACHGEBIETE (Int. Cl.4)** | |
| | | | B 23 K 23/00<br><br>B 23 K 31/00<br><br>B 23 K 35/00 | |
| | Der vorliegende Recherchenbericht wurde für alle Patentansprüche erstellt. | | | |

| Recherchenort | Abschlußdatum der Recherche | Prüfer |
|---|---|---|
| WIEN | 22-10-1986 | BENCZE |